# EUROPEAN PATENT SPECIFICATION

(11) **EP 2 064 049 B1**
(45) Date of publication and mention of the grant of the patent: **24.03.2010**
(21) Application number: 07826123.7
(22) Date of filing: 24.08.2007
(51) Int. Cl.: B29C 57/04, B29C 65/66, F16L 47/22

(54) **METHOD AND ARRANGEMENT FOR CONNECTING PIPE TO CONNECTING PIECE, AND PIPE CONNECTION**
VERFAHREN UND ANORDNUNG ZUR VERBINDUNG EINES ROHRS MIT EINEM VERBINDUNGSSTÜCK UND ROHRVERBINDUNG
PROCÉDÉ ET AGENCEMENT PERMETTANT DE RACCORDER UN TUYAU À UNE PIÈCE DE RACCORDEMENT ET RACCORD DE TUYAU

(30) Priority: 25.08.2006 FI 20065529
(43) Date of publication of application: 03.06.2009
(73) Proprietor: Uponor Innovation AB, 730 61 Virsbo (SE)
(72) Inventor: LARSSON, Thomas, 73691 Kungsör (SE)
(74) Representative: Huhtanen, Ossi Jaakko
(86) International application number: PCT/IB2007/053394
(87) International publication number: WO 2008/023351

(56) References cited:
- EP-A- 0 530 387
- WO-A-94/18486
- FR-A- 2 737 548
- JP-A- 58 142 809

## Description

### Background of the invention

The invention relates to a method for connecting a pipe to a connecting piece, the pipe being made of a material having memory properties, the method comprising positioning an end of the pipe onto a nipple end of the connecting piece.

The invention further relates to an arrangement for connecting a pipe to a connecting piece, the pipe being made of material having memory properties, whereby an end of the pipe is positioned onto a nipple end of the connecting piece.

The invention yet further relates to a pipe connection, comprising a pipe being made of a material having memory properties and a connecting piece, whereby an end of the pipe is positioned onto a nipple end of the connecting piece.

It is known to provide a pipe connection between one end of a pipe made of a plastic material that has memory properties and a connecting piece. The memory properties mean that plastic pipes with a memory capacity automatically strive to substantially return to their original shape and form after having been expanded. For example, plastic pipes that are manufactured from cross-linked polyethylene, possess an active memory capacity at temperatures as low as room temperature. Such pipes are joined together by widening one end of the pipe and inserting into the widened pipe-end a flanged connector which forms a part of the pipe connecting piece, normally made of metal, and which is retained in said pipe-end until the pipe has shrunk to an extent at which it is able to firmly hold the connecting piece. A clamping ring made of an elastic material, which may be the same plastic material as that from which the pipe is made, is expanded and shrunk over the pipe end in order to further enhance the holding and sealing pressure at the pipe connection region. The clamping ring is expanded at the same time as the pipe-end is expanded, with the clamping ring in position around said pipe-end. Such a solution has been disclosed for example in EP 0 530 387. The clamping ring has been made from an extruded pipe by cutting the pipe into a short enough part to form a clamping ring.

### Brief description of the invention

An object of the present invention is to provide an enhanced solution for making a pipe connection.

The method of the invention is characterized by temporarily decreasing wall thickness of the end of the pipe, positioning the temporarily decreased end of the pipe on the nipple end of the connecting piece and letting the end of the pipe return towards its original size such that the end of the pipe firmly and sealingly presses against the nipple end the connecting piece.

Further, the arrangement of the invention is **characterized in that** the arrangement comprises means for temporarily decreasing wall thickness of the end of the pipe.

Yet further, the connection of the invention is **characterized in that** wall thickness of the end of the pipe has been temporarily decreased and allowed to return towards its original size such that the end of the pipe firmly and sealingly presses against the nipple end of the connecting piece.

According to one aspect of the invention, an end of a pipe made of a plastic material that has memory properties is connected onto an end of a connecting piece. The wall thickness of the pipe end is temporarily decreased such that the length of the pipe also increases, the end of the pipe is positioned on the end of the connecting piece and the wall thickness of the end of the pipe is returned towards its original size such that the pipe firmly and sealingly presses against the connecting piece. Thereby the pipe connection is achieved in a relatively simple manner. The wall of the pipe is at least not substantially expanded, whereby the material of the pipe is subjected to only minimal stress.

In one embodiment, the wall of the pipe is made thinner by pressing the wall with a roll. In another embodiment, the wall thickness of the pipe is temporarily decreased with a widening tool positioned inside the pipe for increasing the inner diameter of the pipe and simultaneously positioning a compression ring outside the pipe. The compression ring is used for preventing the outer diameter of the pipe from increasing or for decreasing the outer diameter of the pipe by compressing with the compression ring simultaneously with expanding with the widening tool.

### Brief description of the drawings

In the following, the invention will be described in greater detail by means of preferred embodiments and with reference to the accompanying drawings, in which
Figures 1a, 1b and 1c schematically show cross-sectional side views of a pipe, a connecting piece and a clamping ring in different phases of making a pipe connection,
Figures 2a and 2b schematically show one embodiment of decreasing wall thickness of the pipe, and
Figure 3 schematically shows another embodiment of decreasing the wall thickness of a pipe.

### Detailed description of some embodiments of the invention

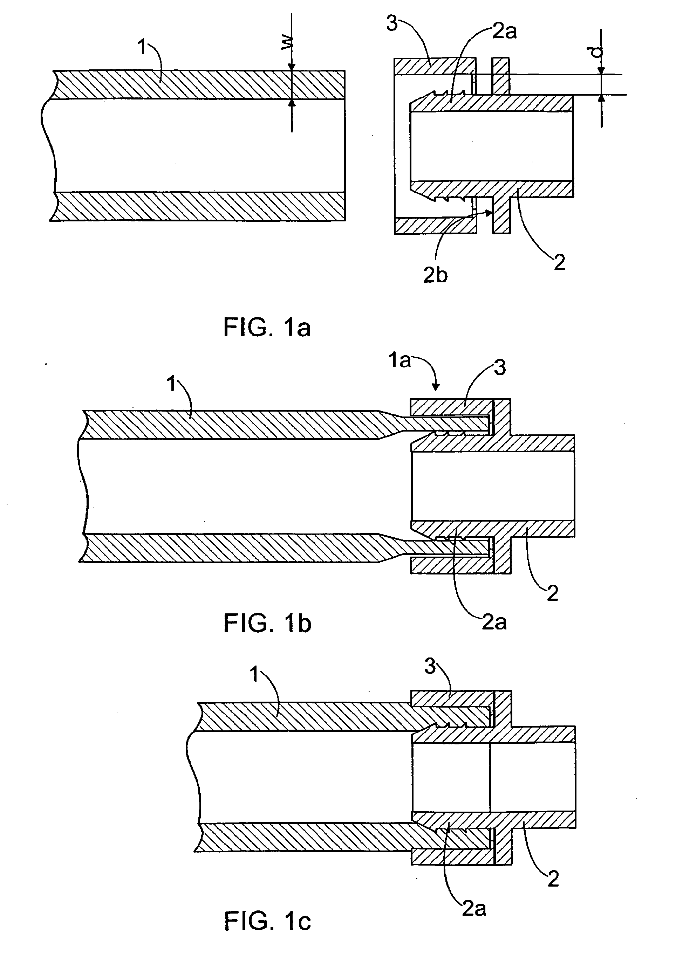

Figure 1 a shows a pipe 1 which is made of a plastic material having memory properties, for instance a cross-linked polyethylene PEX or any other cross-linked polyethylene, and a connecting piece 2 made of metal. The connecting piece 2 can also be made of plastic, such as polyamide PA or any other suitable material.

The connecting piece 2 comprises a nipple end 2a. The nipple end 2a comprises radially projecting flanges. The nipple end 2a is terminated with a radial abutment surface 2b.

A camping ring 3 is positioned around the nipple end 2a. The material of the clamping ring is, for example, metal, such as stainless steel or brass. The clamping ring 3 can also be made of stiff plastic, such as polyamide PA or cross-linked polyethylene PEX or of any other suitable plastic.

The inner diameter of the pipe 1 is smaller than the outer diameter of nipple end 2a. Further, the wall thickness w of the pipe 1 is larger than the distance d between the outer surface of the nipple end 2a and the inner surface of the clamping ring 3.

As shown in Figure 1b, the wall thickness of the end 1 a of the pipe 1 is temporarily decreased by an internal and external force. Simultaneously the length of the pipe is increased. This decreased wall thickness is thus smaller than the distance d between the outer surface of the nipple end 2a and the inner surface of the clamping ring 3.

Further, in the phase shown in Figure 1b the inner diameter of the end 1a of the pipe 1 is larger than the outer diameter of the nipple end 2a. Thus, it is easy to position the end 1a of the pipe 1 between the nipple end 2a and the clamping ring 3.

The end 1a of the pipe 1 relaxes automatically and returns to its original thickness. Thus, the end 1 a of the pipe 1 sticks very tightly because it compresses the nipple end 2a and the inner surface of the clamping ring 3. Thus, a tight connection between the pipe 1 and the connecting piece 2 is achieved.

The inner diameter of the pipe 1 and the inner diameter of the nipple end 2a can be equal, whereby the inner surface in the connection is even. An even inner surface enables the liquid to flow smoothly inside the pipe and the connecting piece.

The pipe connection can also be made without the clamping ring 3. However, by using the clamping ring 3, the end 1a of the pipe 1 can be connected extremely tightly with the connecting piece 2.

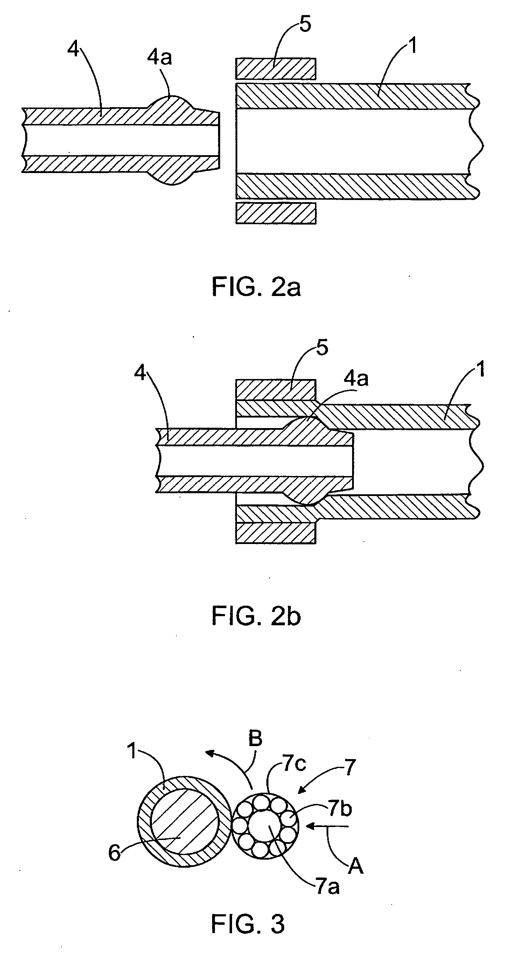

Figures 2a and 2b show the pipe 1 and a widening tool 4. The widening tool 4 is pushed inside the pipe 1 for decreasing the wall thickness of the end 1 a of the pipe 1.

The widening tool 4 comprises a radial bulge 4a, which increases the inner diameter of the end 1a of the pipe 1 when the widening tool 4 is pushed inside the pipe 1.

A compression ring 5 is positioned outside the end 1 a of the pipe 1. The compression ring 5 prevents at least a substantial expansion of the end 1a of the pipe whereby the wall thickness of the end 1a of the pipe 1 is decreased. A small clearance may be provided between the outer surface of the pipe 1 and the inner surface of the compression ring 5 whereby the pipe 1 can expand to some extent. However, the clearance is smaller than the height of the bulge 4a, whereby the wall thickness of the end 1a of the pipe 1 is decreased and the clearance is also so small that the length of the pipe increases.

It is also possible to form the compression ring 5 such that it compresses the outer surface of the end 1 a of the pipe 1, whereby also the outer diameter of the pipe 1 is decreased.

The end 1a of the pipe 1 can be heated when the wall thickness of the end 1 a of the pipe 1 is decreased. The end 1 a of the pipe 1 can be heated by providing the widening tool 4 and/or the compression ring 5 with heating resistors. The pipe 1 can also be heated before the tool 4 is pushed inside the pipe 1. Any suitable means for heating cross-linked polyethylene PEX can be used.

Figure 3 shows another embodiment of decreasing the wall thickness of the pipe 1. A shaft 6 is positioned inside the pipe 1. The outer surface of the pipe 1 is pressed by a pressing roll 7. The pressing is denoted by arrow A.

The pressing roll 7 comprises a shaft 7a and a sleeve 7c. A bearing 7b is provided between the shaft 7a and sleeve 7c such that the sleeve 7c can rotate with respect to the shaft 7a. The pressing roll 7a is rotated around the pipe 1 as denoted by arrow B.

The shaft 6 may also grow wider, whereby the inner diameter of the pipe 1 is increased and, simultaneously with the pressing roll 7, the outer diameter of the pipe 1 can be decreased.

It is also possible to rotate the shaft 6 and thereby the pipe 1 and keep the pressing roll 7 stationary.

The pipe 1 can also be heated such that the pressing roll 7 is heated and/or the shaft 6 is heated. By using external heating a need to use a mechanical force can be decreased. The temperature should be lower than the glass transition temperature of the material (e.g. about 120°C with cross-linked polyethylene PEX).

In some cases, the features shown in this description can be used as such, irrespective of other features. Then again, the features shown in this description may, if necessary, be combined in order to form different combinations. For example, the widening tool 4 and the pressing roll 7 can be used together.

It is obvious to a man skilled in the art that as technology progresses, the basic idea of the invention can be carried out in numerous ways. Thus, the invention and its embodiments are not limited by the previous examples but they may vary within the scope of the appended claims.

## Claims

1. A method for connecting a pipe to a connecting piece, the pipe (1) being made of a material having memory properties, the method comprising positioning an end (1a) of the pipe (1) onto a nipple end (2a) of the connecting piece (2), **characterized by** temporarily decreasing wall thickness of the end (1a) of the pipe (1) such that simultaneously the length of the pipe (1) increases, positioning the temporarily decreased end (1 a) of the pipe (1) on the nipple end (2a) of the connecting piece (2) and letting the end (1a) of the pipe (1) return towards its original size such that the end (1 a) of the pipe (1) firmly and sealingly presses against the nipple end (2a) of the connecting piece (2).

2. A method as claimed in claim 1, **characterized by** decreasing the wall thickness by pressing the wall with a roll (7).

3. A method as claimed in claim 1 or 2, **characterized by** decreasing the wall thickness by a widening tool (4) positioned inside the pipe (1) for increasing the inner diameter of the pipe (1) and simultaneously preventing the outer diameter of the pipe (1) from substantially increasing.

4. A method as claimed in claim 3, **characterized by** compressing, simultaneously with the expanding with the widening tool (4), the outer surface of the pipe (1) with a compression ring (5).

5. A method as claimed in any one of the preceding claims, **characterized by** the end (1 a) of the pipe (1) being positioned between an outer surface of the nipple end (2a) and an inner surface of a clamping ring (3), whereby the wall thickness (w) of the pipe (1) is larger than a distance (d) between the surface of the nipple end (2a) and the inner surface of the clamping ring (3).

6. An arrangement for connecting a pipe to a connecting piece, the pipe (1) being made of a material having memory properties, whereby an end (1 a) of the pipe (1) is positioned onto a nipple end (2a) of the connecting piece (2), **characterized in that** the arrangement comprises means for temporarily decreasing wall thickness of the end (1 a) of the pipe (1) and simultaneously increasing the length of the pipe.

7. An arrangement as claimed in claim 6, **characterized in that** the arrangement comprises a pressing roll (7) for decreasing the wall thickness.

8. An arrangement as claimed in claim 6 or 7, **characterized in that** the arrangement comprises a widening tool (4) for increasing the inner diameter of the pipe (1) and means for preventing the outer diameter of the pipe (1) from substantially increasing.

9. An arrangement as claimed in claim 8, **characterized in that** the arrangement comprises a compression ring (5) for compressing the outer surface of the pipe (1) simultaneously with expanding with the widening tool (4).

10. An arrangement as claimed in any one of claims 6 to 9, **characterized in that** the arrangement comprises a clamping ring (3) positioned outside the pipe (1), the wall thickness (w) of the pipe (1) being larger than a distance (d) between the outer surface of the nipple end (2a) and the inner surface of the clamping ring (3).

11. A pipe connection, comprising a pipe (1) being made of a material having memory properties and a connecting piece (2), whereby an end (1a) of the pipe (1) is positioned onto a nipple end (2a) of the connecting piece (2), **characterized in that** wall thickness of the end (1a) of the pipe (1) has been temporarily decreased and length of the pipe simultaneously increased and allowed to return towards its original size such that the end (1a) of the pipe (1) firmly and sealingly presses against the nipple end (2a) of the connecting piece (2).

12. A pipe connection as claimed in claim 11, **characterized in that** the pipe connection comprises a clamping ring (3) positioned outside the end (1a) of the pipe (1), whereby the wall thickness (w) of the pipe (1) is larger than a distance (d) between the surface of the nipple end (2a) and the inner surface of the clamping ring (3).

13. A pipe connection as claimed in claim 11 or 12, **characterized in that** the inner diameter of the pipe (1) is equal to the inner diameter of the nipple end (2a).

## Patentansprüche

1. Verfahren zum Verbinden eines Rohrs mit einem Verbindungsstück, wobei das Rohr (1) aus einem Material mit Formgedächtniseigenschaften besteht, wobei das Verfahren das Positionieren eines Endes (1a) des Rohrs (1) an einem Nippelende (2a) des Verbindungsstücks (2) umfasst,
**gekennzeichnet durch** zeitweiliges Reduzieren der Wanddicke des Endes (1a) des Rohrs (1) derart, dass gleichzeitig die Länge des Rohrs (1) zunimmt, Positionieren des zeitweilig reduzierten Endes (1a) des Rohrs (1) an dem Nippelende (2a) des Verbindungsstücks (2) und Ermöglichen des Rückkehrens des Endes (1a) des Rohrs (1) in seine Ausgangsgröße, derart, dass das Ende (1a) des Rohrs (1) fest und dichtend gegen das Nippelende (2a) des Verbindungsstücks (2) drückt.

2. Verfahren nach Anspruch 1, **gekennzeichnet durch** Reduzieren der Wanddicke **durch** Pressen der Wand mit einer Rolle (7).

3. Verfahren nach Anspruch 1 oder 2, **gekennzeichnet durch** Reduzieren der Wanddicke mittels eines in dem Rohr (1) positionierten Aufweitungswerkzeugs (4) zum Vergrößern des Innendurchmessers des Rohrs (1) und gleichzeitigen Verhindern einer nennenswerten Zunahme des Außendurchmessers des Rohrs (1).

4. Verfahren nach Anspruch 3, **gekennzeichnet durch** Zusammendrücken der Außenfläche des Rohrs (1) mittels eines Kompressionsrings (5) gleichzeitig mit dem mittels des Aufweitungswerkzeugs (4) vorgenommenen Aufweiten.

5. Verfahren nach einem der vorhergehenden Ansprüche, **gekennzeichnet durch** Positionieren des Endes (1a) des Rohrs (1) zwischen einer Außenfläche des Nippelendes (2a) und einer Innenfläche eines Klemmrings (3), wodurch die Wanddicke (w) des Rohrs (1) größer ist als ein Abstand (d) zwischen der Außenfläche des Nippelendes (2a) und der Innenfläche des Klemmrings (3).

6. Anordnung zum Verbinden eines Rohrs mit einem Verbindungsstück, wobei das Rohr (1) aus einem Material mit Formgedächtniseigenschaften besteht, wobei ein Ende (1a) des Rohrs (1) an einem Nippelende (2a) des Verbindungsstücks (2) positioniert ist, **dadurch gekennzeichnet, dass** die Anordnung eine Vorrichtung zum zeitweiligen Reduzieren der Wanddicke des Endes (1a) des Rohrs (1) und zum gleichzeitigen Vergrößern die Länge des Rohrs aufweist.

7. Anordnung nach Anspruch 6, **dadurch gekennzeichnet, dass** die Anordnung eine Druckrolle (7) zur Reduzierung der Wanddicke aufweist.

8. Anordnung nach Anspruch 6 oder 7, **dadurch gekennzeichnet, dass** die Anordnung ein Aufweitungswerkzeug (4) zum Vergrößern des Innendurchmessers des Rohrs (1) und eine Vorrichtung aufweist, um zu verhindern, dass sich der Außendurchmesser des Rohrs (1) wesentlich vergrößert.

9. Anordnung nach Anspruch 8, **dadurch gekennzeichnet, dass** die Anordnung einen Kompressionsring (5) zum Zusammendrücken der Außenfläche des Rohrs (1) gleichzeitig mit dem mittels des Aufweitungswerkzeugs (4) vorgenommenen Aufweiten aufweist.

10. Anordnung nach einem der Ansprüche 6 bis 9, **dadurch gekennzeichnet, dass** die Anordnung einen außerhalb des Rohrs (1) positionierten Klemmring (3) aufweist, wobei die Wanddicke (w) des Rohrs (1) größer ist als ein Abstand (d) zwischen der Außenfläche des Nippelendes (2a) und der Innenfläche des Klemmrings (3).

11. Rohrverbindung mit einem Rohr (1) aus einem Formgedächtniseigenschaften aufweisenden Material und einem Verbindungsstück (2), wobei ein Ende (1a) des Rohrs (1) an einem Nippelende (2a) des Verbindungsstücks (2) positioniert ist, **dadurch gekennzeichnet, dass** die Wanddicke des Endes (1a) des Rohrs (1) zeitweilig reduziert worden ist und die Länge des Rohrs gleichzeitig vergrößert worden ist und dem Rohr die Rückkehr in seine Ausgangsgröße ermöglicht worden ist, derart, dass das Ende (1a) des Rohrs (1) fest und dichtend gegen das Nippelende (2a) des Verbindungsstücks (2) drückt.

12. Rohrverbindung nach Anspruch 11, **dadurch gekennzeichnet, dass** die Rohrverbindung einen außerhalb des Endes (1a) des Rohrs (1) positionierten Klemmring (3) aufweist, wodurch die Wanddicke (w) des Rohrs (1) größer ist als ein Abstand (d) zwischen der Oberfläche des Nippelendes (2a) und der Innenfläche des Klemmrings (3).

13. Rohrverbindung nach Anspruch 11 oder 12, **dadurch gekennzeichnet, dass** der Innendurchmesser des Rohrs (1) gleich dem Innendurchmesser des Nippelendes (2a) ist.

## Revendications

1. Procédé de raccordement d'un tuyau à un élément de raccordement, le tuyau (1) étant constitué d'un matériau présentant des propriétés de mémoire, ce procédé comprenant le positionnement d'une extrémité (1a) du tuyau (1) sur une extrémité (2a) de manchon de l'élément (2) de raccordement, **caractérisé par** une réduction temporaire de l'épaisseur de paroi de l'extrémité (1a) du tuyau (1), si bien que simultanément, la longueur du tuyau (1) augmente, positionnant l'extrémité temporairement réduite (1a) du tuyau (1) sur l'extrémité (2a) de manchon de l'élément (2) de raccordement, et permettant à l'extrémité (1a) du tuyau (1) de reprendre sa taille initiale, si bien que l'extrémité (1a) du tuyau (1) appuie fermement et hermétiquement contre l'extrémité (2a) de manchon de l'élément (2) de raccordement.

2. Procédé selon la revendication 1, **caractérisé par** la réduction de l'épaisseur de paroi par compression de la paroi à l'aide d'un rouleau (7).

3. Procédé selon la revendication 1 ou 2, **caractérisé par** la réduction de l'épaisseur de paroi à l'aide d'un outil (4) d'élargissement situé à l'intérieur du tuyau (1), afin d'accroître le diamètre intérieur du tuyau (1), et par la prévention simultanée de toute augmentation importante du diamètre extérieur du tuyau (1).

4. Procédé selon la revendication 3, **caractérisé par** la compression, conjointement avec l'expansion de l'outil (4) d'élargissement, de la surface extérieure du tuyau (1) à l'aide d'un segment (5) de compression.

5. Procédé selon l'une quelconque des revendications précédentes, **caractérisé par le fait que** l'extrémité (1a) du tuyau (1) se trouve entre une surface extérieure de l'extrémité (2a) de manchon et une surface intérieure d'une bague (3) de serrage, moyennant quoi l'épaisseur de paroi (w) du tuyau (1) est supérieure à une distance (d) séparant la surface de l'extrémité (2a) de manchon de la surface intérieure de la bague (3) de serrage.

6. Agencement permettant de raccorder un tuyau à un élément de raccordement, le tuyau (1) étant constitué d'un matériau présentant des propriétés de mémoire, moyennant quoi une extrémité (1a) du tuyau (1) se trouve sur une extrémité (2a) de manchon de l'élément (2) de raccordement, **caractérisé en ce que** l'agencement comprend des moyens de réduction temporaire de l'épaisseur de paroi de l'extrémité (1a) du tuyau (1), et d'augmentation simultanée de la longueur du tuyau.

7. Agencement selon la revendication 6, **caractérisé en ce que** l'agencement comprend un rouleau (7) de compression permettant de réduire l'épaisseur de paroi.

8. Agencement selon la revendication 6 ou 7, **caractérisé en ce que** l'agencement comprend un outil (4) d'élargissement permettant d'accroître le diamètre intérieur du tuyau (1), et des moyens permettant d'empêcher toute augmentation importante du diamètre extérieur du tuyau (1).

9. Agencement selon la revendication 8, **caractérisé en ce que** l'agencement comprend un segment (5) de compression permettant de comprimer la surface extérieure du tuyau (1) simultanément avec l'expansion réalisée à l'aide de l'outil (4) d'élargissement.

10. Agencement selon l'une quelconque des revendications 6 à 9, **caractérisé en ce que** l'agencement comprend une bague (3) de serrage située en dehors du tuyau (1), l'épaisseur (w) de paroi du tuyau (1) étant plus grande qu'une distance (d) séparant la surface extérieure de l'extrémité (2a) de manchon et la surface intérieure de la bague (3) de serrage.

11. Raccordement de tuyau comprenant un tuyau (1) constitué d'un matériau présentant des propriétés de mémoire et un élément (2) de raccordement, moyennant quoi une extrémité (1a) du tuyau (1) se trouve sur une extrémité (2a) de manchon de l'élément (2) de raccordement, **caractérisé en ce que** l'épaisseur de paroi de l'extrémité (1a) du tuyau (1) a été temporairement réduite, et la longueur du tuyau simultanément étendue, puis a repris sa taille initiale, si bien que l'extrémité (1a) du tuyau (1) prend fermement et hermétiquement appui contre l'extrémité (2a) de manchon de l'élément (2) de raccordement.

12. Raccordement de tuyau selon la revendication 11, **caractérisé en ce que** le raccordement de tuyau comprend une bague (3) de serrage située en dehors de l'extrémité (1a) du tuyau (1), moyennant quoi l'épaisseur (w) de paroi du tuyau (1) est plus grande qu'une distance (d) séparant la surface de l'extrémité (2a) de manchon et la surface intérieure de la bague (3) de serrage.

13. Raccordement de tuyau selon la revendication 11 ou 12, **caractérisé en ce que** le diamètre intérieur du tuyau (1) est égal au diamètre intérieur de l'extrémité (2a) de manchon.
